# EUROPÄISCHE PATENTSCHRIFT

(11) **EP 2 349 636 B1**
(45) Veröffentlichungstag und Bekanntmachung des Hinweises auf die Patenterteilung: **05.11.2014**
(21) Anmeldenummer: 09778382.3
(22) Anmeldetag: 08.09.2009
(51) Int. Cl.: B23K 26/14, B23K 26/38, F23D 14/48

(54) **LASERBEARBEITUNGSDÜSE ZUM BEARBEITEN VON BLECHEN ; LASERSCHNEIDMASCHINE MIT ENTSPRECHENDER DÜSE**
LASER MACHINING NOZZLE FOR MACHINING SHEET METAL ; LASER CUTTING MACHINE WITH CORRESPONDING NOZZLE
BUSE D'USINAGE LASER POUR USINER DES TÔLES ; MACHINE DE COUPAGE LASER AVEC UNE BUSE CORRESPONDANTE

(30) Priorität: 29.10.2008 DE 102008053729
(43) Veröffentlichungstag der Anmeldung: 03.08.2011
(73) Patentinhaber: TRUMPF Werkzeugmaschinen GmbH + Co. KG, 71254 Ditzingen (DE)
(72) Erfinder: SZELAGOWSKI, Arnd, 73230 Kirchheim unter Teck (DE); SEPP, Florian, 86972 Altenstadt (DE); METSCH, Volker, 74379 Ingersheim (DE)
(74) Vertreter: Kohler Schmid Möbus
(86) Internationale Anmeldenummer: PCT/EP2009/006493
(87) Internationale Veröffentlichungsnummer: WO 2010/049032

(56) Entgegenhaltungen:
- DE-U1-202007 003 451
- JP-A- 7 148 593
- JP-A- 56 136 295
- JP-A- 58 157 587
- US-A- 4 780 592
- US-A- 5 847 358
- US-A1- 2005 258 151
- US-B1- 6 207 923

## Beschreibung

Die vorliegende Erfindung betrifft eine Laserbearbeitungsdüse zum Bearbeiten von Blechen, insbesondere zum Schneiden von Edelstahlblechen mit einer Dicke größer als 8 mm gemäß dem Oberbegriff des Anspruchs 1 (siehe, z.B., JP 581 157 587).

Beim Laserbearbeiten, insbesondere beim Laserschneiden von Blechen wird während des Bearbeitungsprozesses ein Bearbeitungsgas bzw. ein Schneidgas durch eine Laserbearbeitungsdüse an eine Bearbeitungsstelle zugeführt. Das Schneidgas unterstützt den Schneidprozess hierbei mechanisch: Über der Bearbeitungsstelle bildet sich beim Schneiden ein Druckpolster, das bewirkt, dass die beim Schneidprozess entstehende Schmelze und Schlacke aus der Schnittfuge ausgetrieben wird.

In der Regel werden heute Laserbearbeitungsdüsen eingesetzt, die einen Zuführungsraum mit konischer Innenkontur für den Laserstrahl und ein Bearbeitungsgas aufweisen. Die konische Innenkontur des Zuführungsraums geht in einen zylindrischen Mündungsbereich über, dessen Durchmesser dem Durchmesser der Innenkontur des Zuführungsraums an der dem Mündungsbereich zugewandten Seite entspricht. Für unterschiedliche Blechdicken werden unterschiedliche Düsendurchmesser eingesetzt, wobei als Faustregel gilt: je dicker das Blech umso größer der Düsendurchmesser. Ein größerer Düsendurchmesser führt zu einem höheren Massenstrom, der bei dicken Blechen notwendig ist, weil mehr Material aus der Schnittfuge auszutreiben ist.

Wird das Material bei der Bearbeitung lediglich aufgeschmolzen und nicht verbrannt (sog. "Schmelzschneiden"), muss bei großen Düsendurchmessern der Gasdruck im Druckraum des Schneidkopfes ein Mindestniveau haben (>15...25 bar), damit der Druck im Druckpolster an der Bearbeitungsstelle so hoch ist, dass die Schmelze zuverlässig ausgetrieben werden kann.

Neben der oben beschriebenen Standarddüse sind eine Vielzahl von Düsen für spezielle Zwecke bekannt, beispielsweise Laval-Düsen für das laserunterstützte Brennschneiden oder Düsen für das Schneiden von Siliziumblöcken, die auf der dem Werkstück zugewandten Seite einen konischen Öffnungsbereich aufweisen, wie z.B. in der US 6423928 beschrieben ist.

Durch die WO 2007 059787 der Anmelderin ist eine Düse mit einem Innenkonus als Zuführungsbereich, einem zylindrischen Mündungsbereich und einem sich an den Mündungsbereich anschließenden, zum Werkstück gewandten Hohlraum bekannt geworden, welcher eine Kante zur Erzeugung einer Walzenströmung aufweist. Die dort beschriebene Düse eignet sich zum Schneiden von Edelstahlblechen mit einer Dicke größer 8mm. In dem Hohlraum entsteht ein Druckpolster, der den zentralen Schneidgasstrahl stabilisiert. Im Ergebnis führt dies dazu, dass der Schneidgasstrahl an der Schmelzfront besser anliegt und dadurch die Schmelze kontinuierlich ausgetrieben wird. Sichtbar wird dies in einer deutlich reduzierten Rauhigkeit der Schnittkanten.

Es hat sich jedoch gezeigt, dass die Vorteile dieser Düse nur nutzbar sind, wenn mit einem kleinen Abstand zwischen Düse und Blech (0,3mm < d < 0,5 mm) gearbeitet wird. Wird der Abstand zu groß, wird das Druckpolster zu klein, um den gewünschten gasdynamischen Effekt zu erzielen und die Schmelze auszutreiben.

Die metallische Laserbearbeitungsdüse ist in der Regel vom Rest der Laserbearbeitungsmaschine (und damit auch dem Werkstück; meist einem Metall-Blech) elektrisch isoliert, z.B. indem diese mittels eines dielektrischen Materials, insbesondere einer Keramik, an der Laserbearbeitungsmaschine befestigt wird. Mithilfe eines Sensors einer Abstandsregelung wird die Kapazität des Systems "Düse-Blech" permanent gemessen. Aus der Vergrößerung der Kapazität wird auf eine Abstandsverringerung geschlossen. Im Abstandsbereich < 0,4 mm arbeitet die bekannte Abstandsregelung jedoch mit den bekannten Laserbearbeitungsdüsen nicht mehr befriedigend genug zusammen. Der Sensor der Abstandsregelung ermittelt Messwerte, die von der Abstandsregelung als Kollision der Laserbearbeitungsdüse mit dem Werkstück bewertet werden. Hinzu kommt, dass der Abstand bei kleinen Werten deutlich sensitiver geregelt wird, als dies z.B. bei einem Abstand von 1,0 mm der Fall ist. Kommt es nun zu einer geringen Störung des elektromagnetischen Feldes, z.B. durch Gasplasma, zieht dies eine sofortige Veränderung des Abstandes mit sich. Damit wird die Gasdynamik des Prozesses empfindlich gestört: der Schmelzaustrieb wird verschlechtert und es kann zum Abriss des Schnittes oder zu einer Kollisionsmeldung kommen. Gerade in diesem Abstandsbereich ist daher eine geringe Störanfälligkeit der Laserbearbeitungsdüse zwingend erforderlich.

### Aufgabe der Erfindung

Es ist die Aufgabe der vorliegenden Erfindung, eine Laserbearbeitungsdüse zur Bearbeitung von Blechen, insbesondere zum Schneiden von Edelstahlblechen mit einer Dicke größer als 8 mm, in ihrer Prozess-Stabilität zu verbessern.

### Gegenstand der Erfindung

Eine Laserbearbeitungdüze gemäß der Erfindung ist im Anpruch 1 definiert.

Die sich öffnende Innenkontur des Öffnungsbereichs bildet in etwa das Strömungsprofil ab, das sich bei der Düse der WO 2007 059787 an der Grenze zwischen laminarer und turbulenter Strömung einstellt und gibt so die als günstig bekannten Strömungsverhältnisse an der Bearbeitungsstelle vor. Im Zuführungsraum entstehen an der Stufe zwischen dem Zuführungsraum und dem Mündungsbereich Turbulenzen, die als Druckkissen wirken und kleine Veränderungen im Druck, wie sie bei einer Änderung des Düsenabstands entstehen, abfedern können. Auf diese Weise wird eine Laserbearbeitungsdüse zur Bearbeitung von Blechen bereit gestellt, die auch bei kleinen Abständen zwischen Laserbearbeitungsdüse und Blech von weniger als 0,8 mm oder 0,5 mm prozesssicher eingesetzt werden kann. Typischer Weise sind hierbei der Zuführungsraum, der Mündungsbereich und der Öffnungsbereich radial symmetrisch und koaxial zur Düsenlängsachse angeordnet.

Die Stufe zwischen Zuführungsraum und Mündungsbereich enschließt einen Winkel von mehr oder weniger als 90° mit der Düsenlängsachse der, gemäß der Erfindung, z.B. zwischen ca. 80° und 100° beträgt. Auch muss die Stufe nicht zwingend eine plane Fläche sein, sondern kann ggf. eine Krümmung aufweisen, insbesondere kann der äußere Rand der Stufe an einer verrundeten Ecke in die Mantelfläche des Zuführungsraums übergehen. Wesentlich ist, dass durch die Stufe eine Unstetigkeit in der Innenkontur der Laserbearbeitungsdüse entsteht, die zur Verwirbelung des Bearbeitungsgases führt.

In einer Ausführungsform ist die Querschnittsfläche, welche die Stufe überdeckt, mindestens vier Mal so groß wie die Querschnittsfläche des Mündungsbereichs. Die Querschnittsfläche der Stufe ist hierbei definiert als die Fläche, welche die Stufe (incl. Mündungsbereich) in einer Ebene senkrecht zur Düsenlängsachse überdeckt. Experimente haben gezeigt, dass der Querschnitt der Stufe im Vergleich zum Querschnitt des Mündungsbereichs verhältnismäßig groß sein sollte und insbesondere mehr als vier Mal, ggf. sogar mehr als acht Mal so groß wie die Querschnittsfläche des Mündungsbereichs sein sollte. Geht man von radial symmetrischen Innenkonturen aus, sollte insbesondere der Außendurchmesser der Stufe mindestens doppelt so groß wie der Durchmesser des zylindrischen Mündungsbereichs sein und in der Regel das Vierfache dieses Durchmessers nicht überschreiten.

Bei einer Ausführungsform weist ein erster, sich an den Mündungsbereich unmittelbar anschließender, bevorzugt konisch geformter Abschnitt des Öffnungsbereichs einen ersten Öffnungswinkel auf, der zwischen 20° und 80°, bevorzugt zwischen 25° und 35° beträgt. Experimente haben gezeigt, dass sich die Düsenkontur schon in dem unmittelbar an den Mündungsbereich anschließenden Abschnitt des Öffnungsbereichs mit einem Winkel öffnen sollte, der größer ist als bei einer Laval-Düse mit vergleichbaren Abmessungen, bei welcher der Öffnungswinkel typischer Weise nicht mehr als 10° beträgt. Die Laserbearbeitungsdüse lässt sich besonders einfach fertigten, wenn die Düsenkontur wenigstens einen konisch geformten Abschnitt aufweist.

In einer vorteilhaften Ausführungsform schließt sich an den ersten Abschnitt ein zweiter, bevorzugt konisch geformter Abschnitt an, der einen zweiten, größeren Öffnungswinkel aufweist, der zwischen 100° und 160°, bevorzugt zwischen 135° und 145° beträgt. Die auf der Bearbeitungsseite erwünschten Strömungsverhältnisse lassen sich durch zwei insbesondere konische Abschnitte bereits in guter Näherung nachbilden. Es versteht sich, dass in dem Öffnungsbereich auch mehr als zwei konische Abschnitte gebildet werden können, deren Öffnungswinkel mit zunehmendem Abstand zum Mündungsbereich immer größer werden. In diesem Fall können die Öffnungswinkel ausgehend vom Öffnungswinkel im ersten konischen Abschnitt, der über 20° liegen sollte, von Abschnitt zu Abschnitt langsamer ansteigen als dies bei nur zwei konischen Abschnitten der Fall ist.

Es hat sich gezeigt, dass es günstig ist, zwischen dem ersten Abschnitt und dem zweiten Abschnitt bzw. ggf. weiteren Abschnitten jeweils eine Verrundung zu bilden, um einen stetigen Übergang zwischen den Abschnitten zu erhalten und so der Bildung von Turbulenzen des austretenden Gasstroms entgegenzuwirken. Es versteht sich, dass im Bereich der Austrittsöffnung der Laserbearbeitungsdüse sich an die konisch geformten Bereiche ein zylindrischer Bereich mit geringer Länge in Düsenlängsrichtung anschließen kann, in den der letzte konisch geformte Abschnitt ggf. nicht stetig, d.h. ohne eine Verrundung übergeht.

In einer weiteren Ausführungsform nimmt der Öffnungswinkel der Innenkontur des Öffnungsbereichs mit zunehmendem Abstand vom Mündungsbereich insbesondere kontinuierlich zu. Die Zunahme des Öffnungswinkels kann wie oben beschrieben entlang von zwei oder mehr konischen Abschnitten erfolgen. Wird die Zahl der konischen Abschnitte sehr groß gewählt, kann mittels der konischen Abschnitte eine vorgegebene Funktion für den Radius der Innenkontur des Öffnungsbereichs angenähert werden. Es versteht sich, dass der Radius der Innenkontur auch direkt an eine bevorzugt stetige, monoton ansteigende mathematische Funktion angepasst wird.

In einer weiteren Ausführungsform ist der Durchmesser der an dem Öffnungsbereich gebildeten Austrittsöffnung der Laserbearbeitungsdüse mindestens doppelt so groß wie die Länge des Öffnungsbereichs entlang der Düsenlängsachse. Die Wahl einer Austrittsöffnung mit einem im Vergleich zur Länge des Öffnungsbereichs verhältnismäßig großen Durchmesser hat sich für den Austritt des Bearbeitungsgases in Experimenten als besonders günstig herausgestellt.

In einer weiteren Ausführungsform sind der Zuführungsraum und der Mündungsbereich koaxial zur Düsenlängsachse angeordnet sowie bevorzugt zylinderförmig ausgebildet. Sind sowohl der Zuführungsraum als auch der Mündungsbereich zylindrisch ausgebildet, bildet die Stufe die Grundfläche des zylindrischen Zuführungsraums, an den sich die Mantelfläche des zylindrischen Mündungsbereichs anschließt. Typischer Weise ist der Mündungsbereich zylinderförmig ausgebildet, während der Zuführungsraum zylinderförmig oder ggf. auch in einer anderen, beispielsweise rechteckigen oder quadratischen Form ausgebildet sein kann. Auch kann die an dem Zuführungsraum gebildete Stufe ggf. nicht rechtwinklig zur Düsenachse verlaufen, sondern ggf. eine konische Fläche sein, wobei der Winkel zwischen Düsenlängsachse und Stufe zwischen ca. 80° und ca. 100° betragen sollte. Auch ein gekrümmter Verlauf der Stufe ist möglich, sofern sichergestellt ist, dass sich an der Stufe Verwirbelungen des Bearbeitungsgases ausbilden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Laserschneidmaschine,
- Fig. 2a,b: schematische Darstellungen eines Laserbearbeitungskopfs mit einer Linse (Fig. 2a) und mit zwei Spiegeln (Fig. 2b),
- Fig. 3: eine schematische Darstellung einer Ausführungsform der erfindungsgemäßen Laserbearbeitungsdüse mit einem Öffnungsbereich mit einem einzigen konischen Abschnitt,
- Fig. 4: eine schematische Darstellung einer Ausführungsform der Laserbearbeitungsdüse mit einem Öffnungsbereich mit zwei konischen Abschnitten,
- Fig. 5: eine Darstellung analog Fig. 4 mit einer Verrundung zwischen den beiden konischen Abschnitten, und
- Fig. 6: eine Darstellung einer Ausführungsform der Laserbearbeitungsdüse mit einem Öffnungsbereich mit kontinuierlich wachsendem Öffnungswinkel.

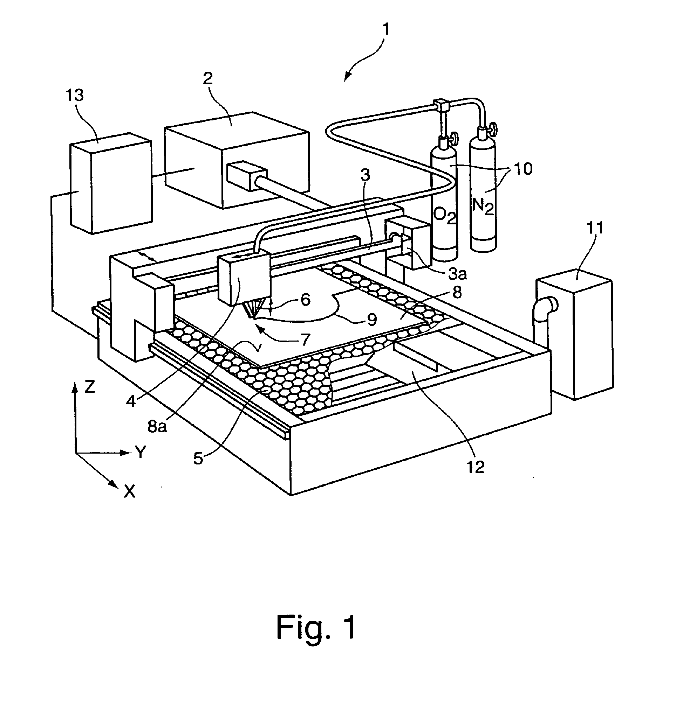

Fig. 1 zeigt eine Laserschneidmaschine 1 zum Laserschneiden mit einem Laserresonator 2, einem Laserbearbeitungskopf 4 und einer Werkstückauflage 5. Als Laserresonator 2 kann ein CO₂-Laser oder ein Festkörperlaser, insbesondere ein Scheiben-, Dioden- oder Faserlaser zum Einsatz kommen, je nachdem, welche Leistungsmerkmale an einen vom Laserresonator 2 erzeugten Laserstrahl 6 im Hinblick auf Wellenlänge, maximale Strahlqualität etc. gefordert werden.

Der von dem Laserresonator 2 erzeugte Laserstrahl 6 wird mittels einer Strahlführung 3, z.B. mittels eines Umlenkspiegels 3a, geführt und entsprechend der Bearbeitungsaufgabe geformt. Die Strahlführung 3 ist während des Betriebs der Laserschneidmaschine 1 vollständig abgeschirmt, zum einen aus Sicherheitsgründen, zum anderen, um Verunreinigungen zu vermeiden.

Den Abschluss der Strahlführung 3 bildet der Laserbearbeitungskopf 4, in dem der Laserstrahl 6 auf eine Bearbeitungstelle 7 fokussiert sowie senkrecht zur Oberfläche 8a eines Werkstücks 8, beispielsweise eines Edelstahlblechs mit einer Dicke größer als 8 mm ausgerichtet wird, um das Material des Werkstücks 8 aufzuschmelzen.

Zum Laserschneiden wird mit dem Laserstrahl 6 zunächst in das Werkstück 8 eingestochen, d.h. das Werkstück 8 wird an einer Stelle punktförmig aufgeschmolzen oder oxidiert und die hierbei entstehende Schmelze wird ausgeblasen. Nachfolgend wird der Laserstrahl 6 über das Werkstück 8 bewegt, so dass ein durchgängiger Schnittspalt **9** entsteht, an dem entlang der Laserstrahl 6 das Werkstück 8 durchtrennt.

Sowohl das Einstechen als auch das Laserschneiden kann durch Hinzufügen eines Bearbeitungsgases in dem Laserschneidkopf **4** unterstützt werden. Als Schneidgase **10** können Sauerstoff, Stickstoff, Druckluft und/oder anwendungsspezifische Gase eingesetzt werden, die den Schneidprozess mechanisch (durch den Druck des Schneidgases wird die Schmelze aus der Schnittfuge ausgetrieben) und ggf. chemisch (durch Unterstützung der Verbrennung) unterstützt. Welches Gas letztendlich verwendet wird, ist davon abhängig, welche Materialien geschnitten und welche Qualitätsansprüche an das Werkstück gestellt werden. Beim Schneiden entstehende Partikel und Gase können mithilfe einer Absaugeinrichtung **11** aus einer Absaugkammer **12** abgesaugt werden. Eine zentrale Steuereinheit **13** dient zur automatischen Steuerung des Bearbeitungsprozesses, insbesondere zur automatischen Positionierung des Laserschneidkopfs 4 an der Bearbeitungsstelle 7 sowie der Einstellung der Strahlparameter des Laserstrahls 6 (z.B. Laserleistung) und der Bearbeitungsparameter an der Maschine (z.B. Gasart, Gasdruck, Düsenabstand... ).

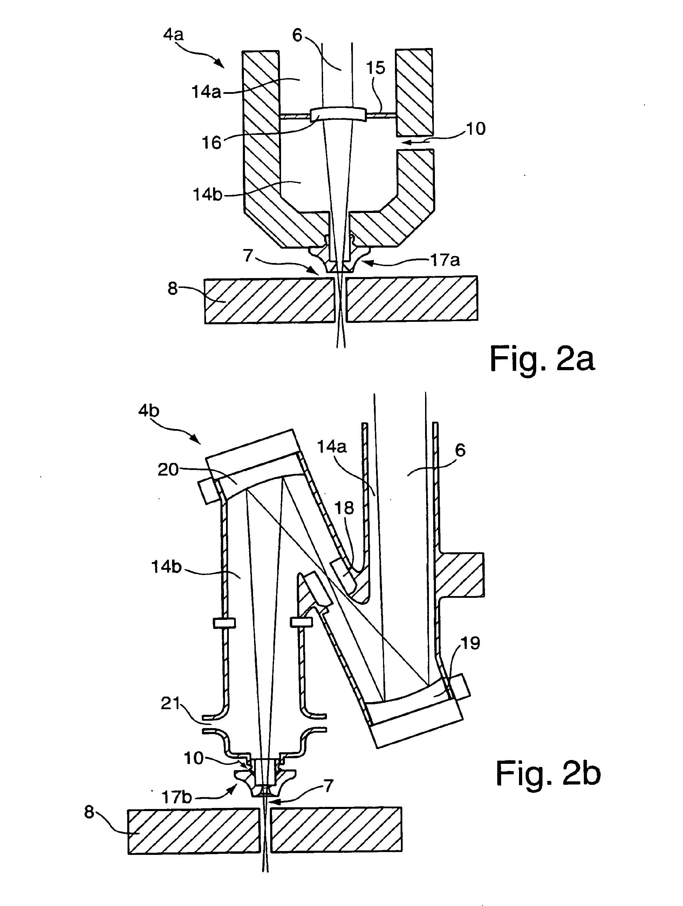

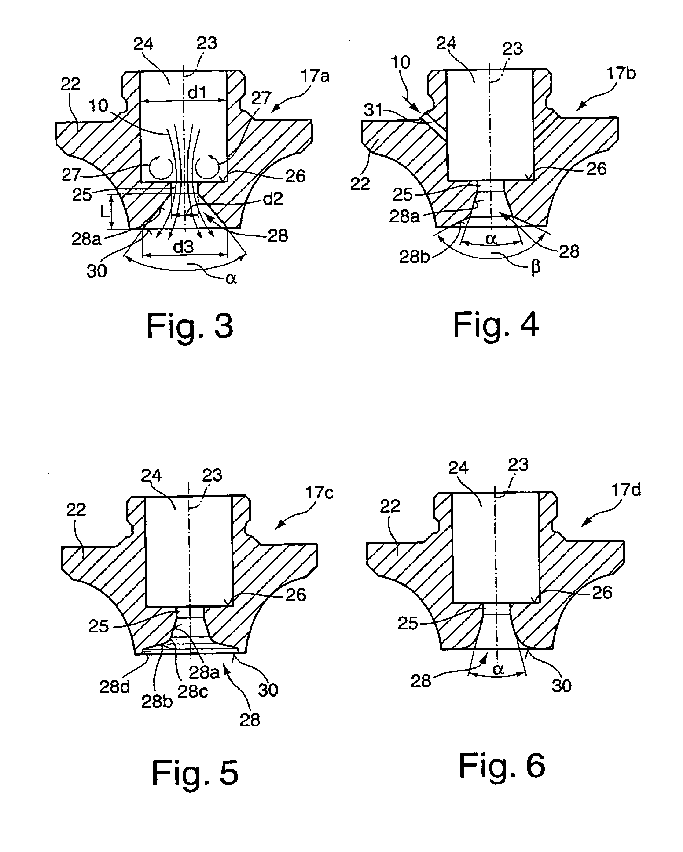

Eine erste Ausführung des Laserschneidkopfs 4 von Fig. 1 in Form eines Linsen-Schneidkopfs **4a** ist in **Fig. 2a** gezeigt. Der Linsen-Schneidkopf 4a weist einen der Strahlführung 3 zugeordneten Gehäusebereich **14a** und einen der Laserbearbeitung zugeordneten Gehäusebereich **14b** auf, die durch eine Zwischenwand **15** gasdicht voneinander getrennt werden. In die Zwischenwand 15 ist eine Fokussierlinse **16** integriert. Der Gehäusebereich **14a,** welcher der Strahlführung zugeordnet ist, wird mit reinem Gas gespült und dadurch vor Schmutzpartikeln aus der Umgebung (z.B. Schneidrauch) und unerwünschten gasförmigen Verunreinigungen geschützt. Der Gehäusebereich 14b, welcher der Laserbearbeitung zugeordnet ist, wird hingegen mit dem Bearbeitungsgas 10, typischer Weise Stickstoff oder Sauerstoff beaufschlagt, um die Bearbeitung mechanisch und ggf. chemisch zu unterstützen. In dem der Laserbearbeitung zugeordneten Gehäusebereich 14b herrscht während der Bearbeitung ein Druck von mehreren Bar. Der Laserstrahl 6 und das Schneidgas 10 werden durch eine Laserbearbeitungsdüse **17a** auf das Werkstück 8 geführt, die weiter unten im Zusammenhang mit **Fig. 3** näher beschrieben wird.

Fig. 2b zeigt einen Laserschneidkopf 4 von Fig.1 in Form eines Spiegelschneidkopfs **4b.** Dieser weist ebenfalls einen der Strahlführung 3 zugeordneten, ersten Gehäuseteil 14a auf, der durch eine Blende **18** von einem der Laserbearbeitung zugeordneten, zweiten Gehäuseteil 14b getrennt wird. Durch einen fokussierenden Paraboloidspiegel **19** im ersten Gehäuseteil 14a wird ein Zwischenfokus im Bereich der Blende 18 gebildet. Ein im zweiten Gehäuseteil 14b angeordneter Ellipsoidspiegel **20** fokussiert den Laserstrahl 6 auf einen Fokuspunkt an der Bearbeitungsstelle 7 an dem Werkstück 8.

Der erste Gehäuseteil **14a** wird mit einem reinen Gas geringen Überdrucks gespült, der zweite Gehäuseteil 14b weist keine Gasspülung mehr auf. Um mit dem Spiegel-Schneidkopf **4b** laserschneiden zu können, wird ein Druckaufbau des Schneidgases 10 mit Hilfe einer Ringspaltdüse **17b** ausgeführt, die in Fig. 4 im Detail dargestellt ist und deren Aufbau weiter unten genauer beschrieben wird. Da Düsen dieser Bauart eine Rückströmung aufweisen können, ist durch ausreichend große Öffnungen **21** zwischen der Blende 18 und der Ringspaltdüse 17b für Abströmmöglichkeiten gesorgt. Die Öffnungen 21 sind so dimensioniert, dass im zweiten Gehäuseteil 14b kein statischer Druck entstehen kann, der größer als der Druck in der Strahlführung ist, um eine Umkehrung der Richtung des Leckagestroms in die Strahlführung 3 zu vermeiden.

Sowohl die Laserbearbeitungsdüse 17a des Linsen-Schneidkopfs 4a als auch die Laserbearbeitungsdüse 17b des Spiegel-Schneidkopfs 4b sind typischer Weise gegenüber der Laserbearbeitungsmaschine 1 und damit auch dem Werkstück 8 elektrisch isoliert (z.B. über ein Dielektrikum in Form einer Keramik). Mit Hilfe eines Sensors einer (nicht gezeigten) Abstandsregelung kann die Kapazität des Systems "Düse-Blech" permanent gemessen werden und aus der Vergrößerung der Kapazität auf eine Abstandsverringerung geschlossen werden, um eine möglichst genaue Abstandsmessung während eines Laserschneidprozesses zu erhalten. Laserbearbeitungsdüsen 17a-d, die zur prozesssicheren, schneidenden Bearbeitung an dem Werkstück 8 auch bei Abständen von weniger als 0,8 mm geeignet sind, werden nachfolgend anhand der Fign. 3 bis 6 beschrieben.

**Fig. 3** zeigt eine Laserbearbeitungsdüse 17a für den Linsen-Schneidkopf 4a von Fig. 2a. Die Laserbearbeitungsdüse 17a weist einen zu einer Düsenlängsachse 23 im Wesentlichen rotationssymmetrischen Düsenkörper **22** auf, der entlang der Düsenlängsachse 23 zunächst einen zylindrischen Zuführungsraum **24** für den Laserstrahl (vgl. Fig. 2a) sowie für das Bearbeitungsgas 10 aufweist, an den sich ein zylindrischer Mündungsbereich 25 anschließt. Der zylindrische Zuführungsraum 24 und der Mündungsbereich **25** sind koaxial zur Düsenlängsachse 23 angeordnet. Der zylindrische Zuführungsraum **24 weist** einen Durchmesser **d1** von ca. 8 mm auf, der zylindrische Mündungsbereich **25** einen Durchmesser **d2** von ca. 2,8 mm. Am Übergang zwischen dem Zuführungsraum **24** und dem Mündungsbereich 25 ist eine Stufe **26** gebildet, deren Querschnittsfläche (inklusive der Querschnittsfläche des Mündungsbereichs 25) mit ¼ π (d1)² mehr als vier Mal so groß ist als die Querschnittsfläche ¼ π (d2)² des Mündungsbereichs 25. Die Stufe 26 dient zur Verwirbelung des Bearbeitungsgases 10, d.h. im Zuführungsraum **24** entstehen an der Stufe 26 benachbart zum laminaren Bereich der Strömung Turbulenzen, die in Fig. 3 als Wirbel **27** dargestellt sind. Die Wirbel 27 dienen als Druckkissen und können kleine Veränderungen des Drucks, wie sie bei einer Änderung des Abstands der Laserbearbeitungsdüse 17a vom Werkstück 8 entstehen können, abfedern.

An der dem Zuführungsraum 24 abgewandten Seite schließt sich an den zylindrischen Mündungsbereich 25 entlang der Düsenlängsachse 23 ein Öffnungsbereich **28** an, der sich gegenüber dem Mündungsbereich radial erweitert und der aus einem einzigen konischen Abschnitt **28a** besteht, der einen Öffnungswinkel α von ca. 75° aufweist. An der dem Mündungsbereich 25 gegenüberliegenden Seite des Öffnungsbereichs 28 ist eine Austrittsöffnung **30** der Laserbearbeitungsdüse 17a gebildet, deren Durchmesser **d3** im Wesentlichen dem Durchmesser des zylindrischen Zuführungsraums **24** entspricht. Die Länge L des Öffnungsbereichs 28 liegt bei ca. 3 mm, d.h. der Durchmesser d3 der Austrittsöffnung 30 ist mit ca. 8 mm mehr als doppelt so groß. Die sich radial erweiternde Innenkontur 28a des Öffnungsbereichs 28 bildet in etwa das Strömungsprofil ab, das sich bei einer Düse nach der WO 2007 059787 an der Grenze zwischen laminarer und turbulenter Strömung einstellt und gibt so die als günstig bekannten Strömungsverhältnisse an der Bearbeitungsstelle vor.

Fig. 4 zeigt eine Laserbearbeitungsdüse **17b,** die sich von der in Fig. 3 gezeigten Laserbearbeitungsdüse 17a dadurch unterscheidet, dass der Öffnungsbereich 28 zwei konische Abschnitte 28a, **28b** aufweist, von denen der erste einen ersten Öffnungswinkel α von ca. 30° aufweist und der zweite, sich an den ersten anschließende Abschnitt 28b einen Öffnungswinkel β aufweist, der größer ist als der erste Öffnungswinkel α und der im vorliegenden Beispiel bei ca. 140° liegt. Mittels der beiden Abschnitte 28a, 28b lassen sich die erwünschten Strömungsverhältnisse an der Bearbeitungsstelle 7 in guter Näherung erhalten. Die Laserbearbeitungsdüse 17b weist weiterhin einen Ringspalt **31** auf, der zur Zuführung des Bearbeitungsgases 10 in den Zuführungsraum 24 dient. Eine solche Zuführung des Bearbeitungsgases 10 unmittelbar am Düsenkörper 22 ist bei dem in Fig. 2b gezeigten Spiegel-Schneidkopf 4b erforderlich, da wie oben ausgeführt, der Druckaufbau in diesem Fall an der Laserbearbeitungsdüse 17b erfolgt.

**Fig. 5** zeigte eine verfeinerte Ausführung einer Laserbearbeitungsdüse **17c,** bei der zwischen dem ersten und zweiten konischen Abschnitt 28a, 28b eine Verrundung **28c** eingefügt ist, um einen stetigen Übergang zwischen den beiden konischen Abschnitten 28a, 28b zu erhalten und damit Turbulenzen zu vermeiden. An den zweiten konischen Abschnitt 28b schließt sich ein zylindrischer Abschnitt 28d an, der eine Länge von ca. 0,5 mm in Richtung der Düsenlängsachse 23 aufweist und an dem die Austrittsöffnung 30 gebildet ist.

**Fig. 6** zeigt schließlich eine Laserbearbeitungsdüse 17d, bei welcher der Öffnungsbereich 28 im Wesentlichen die Form einer Trompete aufweist. Der Öffnungswinkel α, der unmittelbar benachbart zum Mündungsbereich 25 ca. 20° beträgt, vergrößert sich hierbei mit zunehmendem Abstand zum Mündungsbereich 25 kontinuierlich. Es versteht sich, dass auch in diesem Fall der Öffnungsbereich 28 wie in Fig. 5 durch einen zylindrischen Abschnitt abgeschlossen werden kann, an dem die Austrittsöffnung 30 gebildet ist, wobei der Übergang zum zylindrischen Abschnitt auch in diesem Fall nicht stetig erfolgen muss.

Bei allen in Fign. 3 bis 6 gezeigten Laserbearbeitungsdüsen 17a-d weist der erste Abschnitt 28a des Öffnungsbereichs 28 einen Öffnungswinkel α von mehr als 20° auf, d.h. der Öffnungsbereich 28 ist größer als der Öffnungswinkel einer Laval-Düse mit vergleichbarem Mündungsdurchmesser d2. Obwohl die Stufe 26 in Fign. 3 bis 6 in einer Ebene senkrecht zur Düsenachse 23 dargestellt ist, kann die Stufe 26 mit dieser einen Winkel ungleich 90°, typischer Weise zwischen 70° und 110° einschließen, d.h. die Stufe 26 kann zur Düsenachse 23 hin oder von dieser weg geneigt sein; wesentlich ist, dass die Stufe 26 eine Verwirbelung des Bearbeitungsgases 10 erzeugt.

Es versteht sich auch, dass für den Einsatz am Spiegel-Schneidkopf 4b von Fig. 2b nicht nur die in Fig. 4 gezeigte Laserbearbeitungsdüse 17b, sondern auch die übrigen Laserbearbeitungsdüsen 17a, 17c, 17d der Fign. 3, 5 und 6 mit einem Ringspalt 31 versehen werden können. In allen oben beschriebenen Fällen kann die Laserbearbeitungsdüse 17a-d zum Schneiden von Edelstahlblechen mit einer Dicke von mehr als 8 mm prozessstabil eingesetzt werden.

## Patentansprüche

1. Laserbearbeitungsdüse (17a-d) zur Bearbeitung von Blechen (8), insbesondere zum Schneiden von Edelstahlblechen mit einer Dicke größer als 8 mm, umfassend:
einen Zuführungsraum (24) für ein Bearbeitungsgas (10) und einen Laserstrahl (6), einen sich entlang der Düsenlängsachse (23) an den Zuführungsraum (24) anschließenden, gegenüber dem Zuführungsraum (24) verengten zylindrischen Mündungsbereich (25), sowie
einen sich entlang der Düsenlängsachse (23) unmittelbar an den Mündungsbereich (25) anschließenden, sich gegenüber dem Mündungsbereich (25) erweiternden Öffnungsbereich (28),
**gekennzeichnet durch**
eine zwischen dem Zuführungsraum (24) und dem sich unmittelbar an den Zuführungsraum (24) anschließenden Mündungsbereich (25) gebildete Stufe (26) zur Verwirbelung des Bearbeitungsgases (10), wobei die Stufe (26) mit der Düsenlängsachse (23) einen Winkel zwischen 80° und 100° einschließt.

2. Laserbearbeitungsdüse nach Anspruch 1, bei welcher die Querschnittsfläche, welche die Stufe (26) überdeckt, mindestens vier Mal so groß ist wie die Querschnittsfläche des Mündungsbereichs (25).

3. Laserbearbeitungsdüse nach Anspruch 1 oder 2, bei welcher ein erster, sich an den Mündungsbereich (25) unmittelbar anschließender, bevorzugt konisch geformter Abschnitt (28a) des Öffnungsbereichs (28) einen ersten Öffnungswinkel (α) aufweist, der zwischen 20° und 80°, bevorzugt zwischen 25° und 35° beträgt.

4. Laserbearbeitungsdüse nach Anspruch 3, bei welcher ein zweiter, sich an den ersten Abschnitt (28a) anschließender, bevorzugt konisch geformter Abschnitt (28b) des Öffnungsbereichs (28) einen zweiten Öffnungswinkel (β) aufweist, der
zwischen 100° und 160°, bevorzugt zwischen 135° und 145° beträgt.

5. Laserbearbeitungsdüse nach Anspruch 4, bei der zwischen dem ersten Abschnitt (28a) und dem zweiten Abschnitt (28b) eine Verrundung (28c) gebildet ist.

6. Laserbearbeitungsdüse nach einem der vorhergehenden Ansprüche, bei welcher der Öffnungswinkel (α) des Öffnungsbereichs (28) mit zunehmendem Abstand vom Mündungsbereich (25) insbesondere kontinuierlich zunimmt.

7. Laserbearbeitungsdüse nach einem der vorhergehenden Ansprüche, bei welcher der Durchmesser (d3) der an dem Öffnungsbereich (28) gebildeten Austrittsöffnung (31) der Laserbearbeitungsdüse (17a-d) mindestens doppelt so groß ist wie die Länge (L) des Öffnungsbereichs (28) entlang der Düsenlängsachse (23).

8. Laserbearbeitungsdüse nach einem der vorhergehenden Ansprüche, bei welcher der Zuführungsraum (24) und der Mündungsbereich (25) koaxial zur Düsenlängsachse (23) angeordnet sowie bevorzugt zylinderförmig ausgebildet sind.

9. Laserschneidmaschine (1), umfassend:
einen Laserresonator (2) zur Erzeugung eines Laserstrahls (6),
einen Laserbearbeitungskopf (4), sowie
eine Strahlführung (3) zur Führung des Laserstrahls (6) zu dem Laserbearbeitungskopf (4),
**dadurch gekennzeichnet,**
**dass** der Laserbearbeitungskopf (4) eine Laserbearbeitungsdüse (17a-d) nach einem der vorhergehenden Ansprüche aufweist.

## Claims

1. Laser processing nozzle (17a-d) for processing metal sheets (8), in particular for cutting high-grade steel sheets having a thickness greater than 8 mm, comprising:
a supply chamber (24) for a processing gas (10) and a laser beam (6) and
a mouth region (25) which adjoins the supply chamber (24) along the nozzle longitudinal axis (23) and which is narrowed relative to the supply chamber (24), as well as
an opening region (28) which directly adjoins the mouth region (25) along the nozzle longitudinal axis (23) and which widens relative to the mouth region (25)
**characterised by**
a step (26) which is formed between the supply chamber (24) and the mouth region (25) directly adjoining the supply chamber (24) for swirling the processing gas (10), the step (26) confining an angle with the nozzle longitudinal axis (23) of between 80° and 100°.

2. Laser processing nozzle according to claim 1, wherein the cross-sectional surface-area which the step (26) covers is at least four times as large as the cross-sectional surface-area of the mouth region (25).

3. Laser processing nozzle according to claim 1 or claim 2, wherein a first, preferably conical, portion (28a) of the opening region (28) directly adjoining the mouth region (25) has a first opening angle (α) which is between 20° and 80°, preferably between 25° and 35°.

4. Laser processing nozzle according to claim 3, wherein
a second, preferably conical, portion (28b) of the opening region (28) adjoining the first portion (28a) has a second opening angle (β) which is between 100° and 160°, preferably between 135° and 145°.

5. Laser processing nozzle according to claim 4, wherein a rounded portion (28c) is formed between the first portion (28a) and the second portion (28b).

6. Laser processing nozzle according to any one of the preceding claims, wherein the opening angle (α) of the opening region (28) increases in particular continuously as the distance from the mouth region (25) increases.

7. Laser processing nozzle according to any one of the preceding claims, wherein the diameter (d3) of the discharge opening (31) of the laser processing nozzle (17a-d) formed at the opening region (28) is at least twice as large as the length (L) of the opening region (28) along the nozzle longitudinal axis (23).

8. Laser processing nozzle according to any one of the preceding claims, wherein the supply chamber (24) and the mouth region (25) are arranged coaxially relative to the nozzle longitudinal axis (23) and are preferably constructed so as to be cylindrical.

9. Laser cutting machine (1) comprising:
a laser resonator (2) for generating a laser beam (6),
a laser processing head (4), as well as a
beam guidance (3) for guiding the laser beam (6) to the laser processing head (4),
**characterized in that**
the laser processing head (4) has a laser processing nozzle (17a-d) in accordance with any one of the preceding claims.

## Revendications

1. Buse d'usinage au laser (17a-d) pour l'usinage de tôles (8), en particulier pour la découpe de tôles en acier inoxydable d'une épaisseur supérieure à 8 mm, comprenant :
une chambre d'amenée (24) pour un gaz d'usinage (10) et un faisceau laser (6), une zone de débouché cylindrique (25) faisant suite à la chambre d'amenée (24) le long de l'axe longitudinal de buse (23), rétrécie par rapport à la chambre d'amenée (24),
ainsi que
une zone d'ouverture (28) faisant suite immédiatement à la zone de débouché (25) le long de l'axe longitudinal de buse (23), s'élargissant par rapport à la zone de débouché (25),
**caractérisée par**
un gradin (26) formé entre la chambre d'amenée (24) et la zone de débouché (25) faisant suite immédiatement à la chambre d'amenée (24) pour mettre en turbulence le gaz d'usinage (10), le gradin (26) faisant avec l'axe longitudinal de buse (23) un angle compris entre 80° et 100°.

2. Buse d'usinage au laser selon la revendication 1, dans laquelle la surface de section transversale que couvre le gradin (26) est au moins quatre fois plus grande que la surface de section transversale de la zone de débouché (25).

3. Buse d'usinage au laser selon la revendication 1 ou 2, dans laquelle une première portion (28a) de la zone d'ouverture (28) faisant suite immédiatement à la zone de débouché (25), de préférence de forme conique, présente un premier angle d'ouverture (α) qui est compris entre 20° et 80°, de préférence entre 25° et 35°.

4. Buse d'usinage au laser selon la revendication 3, dans laquelle une deuxième portion (28b) de la zone d'ouverture (28), faisant suite à la première portion (28a), de préférence de forme conique, présente un deuxième angle d'ouverture (β) qui est compris entre 100° et 160°, de préférence entre 135° et 145°.

5. Buse d'usinage au laser selon la revendication 4, dans laquelle un arrondi (28b) est formé entre la première portion (28a) et la deuxième portion (28c).

6. Buse d'usinage au laser selon l'une des revendications précédentes, dans laquelle l'angle d'ouverture (α) de la zone d'ouverture (28) augmente, en particulier de manière continue, lorsque la distance par rapport à la zone de débouché (25) augmente.

7. Buse d'usinage au laser selon l'une des revendications précédentes, dans laquelle le diamètre (d3) de l'ouverture de sortie (31) de la buse d'usinage au laser (17a-d), formée à la zone d'ouverture (28), est au moins deux fois plus grande que la longueur (L) de la zone d'ouverture (28) le long de l'axe longitudinal de buse (23).

8. Buse d'usinage au laser selon l'une des revendications précédentes, dans laquelle la chambre d'amenée (24) et la zone de débouché (25) sont disposées coaxialement à l'axe longitudinal de buse (23) et de préférence de forme cylindrique.

9. Machine de découpage au laser (1), comprenant :
un résonateur laser (2) pour générer un faisceau laser (6),
une tête d'usinage au laser (4) et
un guide de faisceau (3) pour guider le faisceau laser (6) vers la tête d'usinage au laser (4),
**caractérisée en ce**
**que** la tête d'usinage au laser (4) présente une buse d'usinage au laser (17a-d) selon l'une des revendications précédentes.
